# EUROPÄISCHE PATENTSCHRIFT

(11) **EP 0 825 505 B1**
(45) Veröffentlichungstag und Bekanntmachung des Hinweises auf die Patenterteilung: **10.04.2002**
(21) Anmeldenummer: 97109629.2
(22) Anmeldetag: 13.06.1997
(51) Int. Cl.: G05B 19/05

(54) **Verfahren zur ferngesteuerten Inbetriebnahme von Maschinenanlagen, insbesondere Verdichtern und Turbinen**
Method for remote power-up of machine-assemblies in particular for compressors and turbines
Procédé pour la mise en service télécommandée des ensembles de machines en particulier des compresseurs et des turbines

(30) Priorität: 21.08.1996 DE 19633602
(43) Veröffentlichungstag der Anmeldung: 25.02.1998
(73) Patentinhaber: MAN Turbomaschinen AG GHH BORSIG, 46145 Oberhausen (DE)
(72) Erfinder: Blotenberg, Wilfried, Dr.-Ing., 46535 Dinslaken (DE)
(74) Vertreter: Radünz, Ingo, Dipl.-Ing.

(56) Entgegenhaltungen:
- EP-A- 0 351 882
- EP-A- 0 382 853
- WO-A-93/18441
- FR-A- 2 695 237
- GB-A- 2 204 426
- US-A- 5 444 861
- PATENT ABSTRACTS OF JAPAN vol. 014, no. 345 (P-1083), 26.Juli 1990 & JP 02 123600 A (NEC CORP), 11.Mai 1990,
- PATENT ABSTRACTS OF JAPAN vol. 014, no. 248 (E-0933), 28.Mai 1990 & JP 02 069097 A (MITSUBISHI ELECTRIC CORP), 8.März 1990,

## Beschreibung

Die Erfindung betrifft ein Verfahren zum Parametrieren, Strukturieren und Programmieren von Steuerungs- und Regelungsanlagen sowie von Maschinenleitsystemen für Maschinenanlagen, insbesondere von Turbinen- und Verdichteranlagen sowie deren Antriebseinheiten und deren Zubehör.

Maschinenanlagen, insbesondere Turbinen und Verdichter sowie deren Antriebe, werden zunehmend mit komplexen digitalen Steuerungen und Regelungen ausgerüstet.

Moderne digitale Regelungen und Steuerungen gestatten es einerseits, durch Einsatz komplexer Berechnungsmethoden die spezifische Maschinenbelastung im jeweiligen Betriebspunkt genauer zu bestimmen und dadurch die Maschinenkomponenten höher zu belasten, ohne die Lebensdauer der gesamten Maschinenanlage zu reduzieren. Weiterhin kann durch Verwendung komplexer Steuer- und Regelalgorithmen ein automatisierter Schutz der Maschinenanlage auch gegenüber solchen Störfällen realisiert werden, die bisher nicht beherrschbar waren.

Mit zunehmender Komplexität der Regel- und Steueralgorithmen erfordert die Inbetriebnahme solcher Maschinenanlagen umfassende Systemkenntnis.

Verdichter- und Turbinenanlagen sind weltwelt im Einsatz, häufig in sehr entlegenen Gebieten, z. B. auf Gasverdichterstationen entlang von Erdgaspipelines, auf Ölbohrplattformen, aber auch in chemischen oder petrochemischen Betrieben.

Zur Inbetriebnahme einer Verdichter- oder Turbinenanlage ist es erforderlich, daß Regelparameter optimiert werden, wobei die Maschinenanlage zusammen mit dem vor- und nachgeschalteten Prozeß betrieben wird. Die Reglerparameter sind bei diesem ersten Betrieb der kompletten Anlage derart einzustellen, daß die Regelkreise auf Änderungen von Sollwert: und Istwert so schnell wie möglich reagieren, aber dennoch im gesamten Arbeitsbereich stabiles Verhalten zeigen. Diese Optimierung kann nur am Aufstellungsort beim Betrieb der Gesamtanlage erfolgen.

Weiterhin sind bei der ersten Inbetriebnahme bzw. bei der Inbetriebnahme nach Stillständen Grenzwerte für Gefahrenzustände zu ermitteln und Parameter innerhalb der Regelung und Steuerung entsprechend anzupassen.

Moderne Maschinenüberwachungssysteme gestatten es, den aktuellen Arbeitspunkt der Maschine dynamisch in einem Kennfeld darzustellen. Derartige Kennfelder können z. B. die Enthalpiedifferenz über dem Volumenstrom darstellen, aber auch den Wirkungsgrad oder die erzeugte bzw. verbrauchte Leistung über dem Durchfluß. Dem Betriebspersonal gestattet die dynamische Anzeige des jeweiligen aktuellen Betriebspunkts im Kennfeld eine Beurteilung des Betriebsverhaltens sowie der zur Verfügung stehenden Betriebsreserven. Andere Darstellungen geben z. B. Informationen über Verschmutzungszustände usw. an.

Die Kennfelder der Maschinen werden in der Regel theoretisch berechnet und vor Auslieferung der Maschinenanlage in die Maschinenüberwachungseinheit einprogrammiert. Aufgrund von Fertigungstoleranzen kann allerdings das nach Fertigstellung der Anlage gemessene Kennfeld vom theoretisch berechneten abweichen.

Es ist deshalb üblich, das Kennfeld während der Inbetriebnahme zu messen und mit dem errechneten Kennfeld zu vergleichen. Bei Abweichungen sind die Parameter im Programm der Maschinenüberwachungseinheit derart zu ändern, daß das dargestellte Kennfeld dem gemessenen Kennfeld entspricht.

Nach längerer Betriebszeit kann sich das Kennfeld der Maschinenanlage entweder durch Änderungen innerhalb der Anlage, z. B. durch Änderungen der Rohrleitungsführung, aber auch durch Verschleiß oder Verschmutzung der Maschinenanlage, verändern. In diesen Fällen ist eine Anpassung der gespeicherten Kennfelder bzw. der Rechenalgorithmen zur Bestimmung der Kennfelder oder deren Parameter von Zeit zu Zeit erforderlich.

Moderne digitale Regler und Steuerungen gestatten es, Algorithmen und Steuersequenzen durch Softwareänderungen umzustellen, ohne daß Änderungen an der Hardwareausrüstung erforderlich sind. Damit besteht die Möglichkeit, Regel- und Steueralgorithmen regelmäßig kostengünstig auf den letzten Stand der technischen Entwicklung zu bringen.

Alle zuvor genannten Änderungen machen die Anwesenheit von Fachleuten vor Ort erforderlich, die die gemessenen Daten analysieren können und daraus ermitteln, auf welche Werte die Parameter einzustellen bzw. wie die Algorithmen zu ändern und die entsprechenden. Programmänderungen vorzunehmen sind.

Die Entsendung von Fachleuten zu den weit entfernten Betriebsstätten ist oft mit hohen Kosten verbunden.

Bei plötzlichen Betriebsstörungen ist die Anreise eines Software-Fachmannes zur Anlage erforderlich, damit dieser die vor Ort gemessenen und aufgezeichneten Betriebsparameter analysiert und daraus auf die Ursache der Störung schließt. Häufig ist zur Vermeidung weiterer Störfälle eine Änderung der Software erforderlich. Diese Änderung ist vor Ort von dem Fachmann vorzunehmen und zu erproben.

Nicht selten vergehen Stunden oder Tage, bis ein Fachmann an der Betriebsstätte angelangt ist. Während dieser Zeit ist die Anlage nicht betriebsbereit. Die Produktionsausfallkosten sind oft erheblich.

Es sind seit langem Übertragungsverfahren bekannt, die die Übertragung von Meßwerten von einem beliebigen Ort zu einem anderen Ort über Datenfernleitung gestatten. Hierdurch ist es möglich, daß ein Fachmann Informationen über den Betriebszustand einer Maschine oder Anlage von einem anderen Ort erhält und an seinem gewöhnlichen Aufenthaltsort analysieren kann. Einem vor Ort anwesenden weiteren Fachmann kann dieser dann Empfehlungen zur Änderung von Parametern oder Programmstrukturen geben, die der an der Betriebsstätte anwesende Fachmann umsetzen kann. Auf einen Fachmann vor Ort kann bei diesem Verfahren nicht verzichtet werden.

Es sind weiterhin Übertragungsverfahren bekannt, die es gestatten, Computerprogramme von einem beliebigen Ort über Datenfernleitung an einen anderen Ort zu übertragen. Diese Verfahren lösen die erfindungsgemäße Aufgabe aber ebenfalls nicht, da das über die Datenfernleitung übertragene Programm vor Ort über ein Programmiergerät in die Regelung und Steuerung geladen werden und gestartet werden muß. Auch diese Tätigkeiten machen die Anwesenheit eines Systemspezialisten vor Ort erforderlich.

In der WO-A-93/18441 ist ein System zur Regelung einer Maschinenanlage beschrieben. Die Maschinenanlage ist mit einer programmierbaren Steuerungs- und Regelanlage und diese ist mit einem Programmiergerät verbunden. Die Aufgabe des Programmiergerätes besteht darin, Informationen vom Steuerprozess, die in der Steuer- und Regelanlage ablaufen, auf dem Bildschirm anzuzeigen. Das System prüft, ob das Monitorprogramm zur Anzeige der Zustände auf dem Programmiergerät mit dem Programm in der programmierbaren Steuerungs- und Regelanlage übereinstimmt. Das Programmiergerät braucht somit das Programm für den genauen Ablauf der Steuerung gar nicht zu kennen, es muß lediglich die Abläufe auf dem Bildschirm des Programmiergerätes korrekt darstellen. Insbesondere ist ein Programmeingriff von dem Programmiergerät zur Steuerung gar nicht vorgesehen

Aus der EP-A-0 351 882 ist eine programmierbare Regelanlage bekannt, die zur Regelung einer Maschinenanlage dient. Die Regelanlage enthält eine Regler-CPU, in der das Programm der Regelanlage abläuft, und einen Speicher, in dem das Programm der Regelanlage gespeichert ist. Die Regelanlage ist über eine Datenfernleitung mit einem Programmiergerät verbunden, das auf die Regler-CPU einwirkt.

Üblicherweise wird zur Inbetriebnahme einer Maschinenanlage ein Programmiergerät örtlich an die Steuerung und Regelung angeschlossen. In einigen Steuerungen und Regelungen sind die Programmiergeräte fest eingebaut, so z. B. in einem System nach der EP 0 378 713.
Eine erforderliche Programmänderung für die Steuerung und Regelung wird derart durchgeführt, daß das komplette Programm in das Programmiergerät geladen wird und die Änderung im Programmiergerät durchgeführt wird. Das geänderte Programm wird dann in voller Länge komplett in den Speicher der Steuerung und Regelung geladen. Auch bei Änderung von nur einer Programmzeile muß das gesamte, häufig recht umfangreiche Programm neu geladen werden. Dies erfordert eine schnelle Datenübertragung, die nur mit breitbandigen Datenleitungen möglich ist. Deshalb muß sich das Programmiergerät bei der Inbetriebnahme in der Nähe der Steuerung und Regelung befinden. Eine Fernprogrammierung ist wegen der hohen Übertragungskosten bei breitbandigen Datenleitungen nicht lohnend und häufig technisch gar nicht durchführbar.

Bei Inbetriebnahmen ist häufig eine unverzügliche Rückmeldung der Auswirkung einer Parameter-, Struktur- oder Programmänderung auf den Prozeßablauf unverzichtbar. Der Fachmann muß eine direkte und unverzögerte Eingriffsmöglichkeit auf die Regelung und Steuerung haben und auch Steuerbefehle ausführen können, sollte die durchgeführte Parameter-, Struktur- oder Programmänderung zu einer unzulässigen oder gar gefährlichen Betriebsweise der Maschine oder Anlage führen. Auch dies erfordert breitbandige Datenleitungen von der Maschinenanlage zum Programmierer.

Die Aufgabe der Erfindung besteht darin, ein Verfahren zur Inbetriebnahme von weit entfernt installierten Maschinenanlagen zu schaffen, das es gestattet, von einem zentralen Leitstand oder einem Entwicklungslabor aus Änderungen von Programmen, Strukturen und Parametern an Regelungen und Steuerungen sowie Maschinenüberwachungssystemen vorzunehmen sowie auch Stillstandszeiten von Prozeßanlagen nach Anlagenausfällen zu verkürzen, ohne daß ein Fachmann am Aufstellungsort der Maschinenanlagen anwesend ist.

Die Lösung der Aufgabe erfolgt in der Weise, wie es in Anspruch 1 angegeben ist, die Unteransprüche beinhalten eine vorteilhafte Ausgestaltung der Erfindung.

Die Erfindung beschreibt ein Verfahren, das es gestattet, mit einer gewöhnlichen Datenleitung, einer Telefonleitung, auch Maschinenanlagen mit komplexen Steuerungen und Regelungen von einem beliebigen Ort aus zu parametrisieren oder zu programmieren, ohne daß ein Fachmann vor Ort an der Maschinenanlage anwesend ist.

Erfindungsgemäß befindet sich vor Ort in der externen Betriebsstätte ein erstes Programmiergerät, das mit der Regelung und Steuerung bzw. der Maschinenüberwachungseinrichtung der Maschinenanlage verbunden ist.
Von diesem ersten Programmiergerät aus können sowohl Parameter als auch Programmstrukturen oder ganze Programme geändert, kopiert oder neu erstellt werden. Ein zweites Programmiergerät befindet sich an einem anderen Ort, beispielsweise in einem zentralen Leitstand oder in einem Entwickungslabor. Beide Geräte sind über eine Datenfernleitung und Modems oder dergleichen verbunden. Gestattet das erste Programmiergerät der Maschinenanlage den Abruf aktueller Betriebsparameter und die Anzeige auf dem angeschlossenen Bildschirm, so zeigt auch das zweite Programmiergerät im zentralen Leitstand die gleichen Parameter an. Wird im zweiten Programmiergerät die Anzeige eines bestimmten Betriebswertes oder einer Gruppe von Betriebswerten angewählt, so ruft das erste Programmiergerät diese Werte aus der Steuerung und Regelung ab und stellt sie auf seinem Bildschirm dar. Die gleichen Betriebswerte werden auf dem Bildschirm des zweiten Programmiergerätes ebenfalls angezeigt.

Mit einem solchen Verfahren hat ein Fachmann am Ort, an dem sich das zweite Programmiergerät befindet, den vollen Zugriff auf das erste Programmiergerät und damit auf die gesamte Regelung und Steuerung, und zwar genau so, als ob er selbst in der Betriebsstätte vor dem ersten Programmiergerät säße. Er kann beliebige Parameter oder Programmstrukturen ändern, kann die Auswirkungen direkt und unverzögert beobachten und bei Gefahr sofort steuernd in das System eingreifen.

Durch die erfindungsgemäße Verwendung von zwei Programmiergeräten, eines an der Betriebsstätte der Maschinenanlage und ein zweites im entfernten Leitstand oder Entwicklungslabor, reduziert sich die Menge der zu übertragenden Daten erheblich. Wenige Steuerbefehle können am jeweils anderen Programmiergerät umfangreiche Aktionen auslösen, da ja die gleiche Programmier-Software auf beiden Programmiergeräten geladen ist.

In einer weiteren Ausgestaltung der Erfindung erhalten die Massenspeicher des ersten Programmiergerätes (Festplatte, Magnetband, Floppy) in der externen Maschinenanlage eine andere Laufwerkbezeichnung als die Massenspeicher des zweiten Programmiergeräts im zentralen Leitstand. Dadurch ist die Möglichkeit gegeben, daß von jedem Programmiergerät auf die Massenspeicher des anderen zugegriffen werden kann. Ein mit dem ersten Programmiergerät nahe der Maschinenanlage geändertes und nur auf dem Massenspeicher des ersten Programmiergerätes oder nur im Speicher der Regelung und Steuerung abgelegtes Programm kann dadurch vom zweiten Programmiergerät gelesen und editiert werden. Darüber hinaus besteht auch die Möglichkeit, auf Datensätze gespeicherter Betriebsdaten aus zurückliegenden Zeiträumen vom zweiten Programmiergerät zuzugreifen, diese zu analysieren und auszuwerten. Komplette Programme können in gleicher Weise übertragen werden.

Besonders vorteilhaft gestaltet sich die Nutzung des erfindungsgemäßen Verfahrens beim Einsatz von Mobiltelefonen. Der Anschluß an das öffentliche Fernsprechnetz ist oft nicht möglich, weil keine Telefonanschlußleitungen in der Nähe der externen Maschinenanlage verfügbar sind. Wird nun ein Mobiltelefon mit Modemanschluß eingesetzt, kann auf einen lokalen terristischen Telefonanschluß verzichtet werden. Auch das zweite Programmiergerät kann über ein Mobiltelefon an ein tragbares Programmiergerät, z. B. einen batteriebetriebenen tragbaren Computer angeschlossen werden. Damit besteht die Möglichkeit, daß ein Fachmann, der sich an einem beliebigen Ort aufhält, auch in einer entlegenen Gegend weitab von der nächsten Telefonleitung, eine Steuerungs- und Regelungsanlage an einem beliebigen Ort in Betrieb nehmen oder eine Störung beseitigen kann.

Die Vorteile dieses Verfahrens liegen auf der Hand. Kostspielige Reisen von hochqualifizierten Fachleuten mit langen Reise- und Wartezeiten werden vermieden.
Bei einer Betriebsstörung kann der beste verfügbare Fachmann, wo immer er sich auch befinden mag, über Telefon oder Funk informiert werden. Er kann sich unverzüglich mit seinem gerade verfügbaren Programmiergerät mit der Regelung und Steuerung in der Betriebsstätte in Verbindung setzen, die aktuellen und erforderlichenfalls auch historische Betriebsdaten aufrufen und unverzüglich mit der Störfallanalyse, der Beseitigung der Ursachen und der Wiederinbetriebnahme beginnen.

Das Prinzipschema der erfindungsgemäßen Programmiereinrichtung ist in der einzigen Patentfigur dargestellt.

Eine Maschinenanlage (1) ist über Rückkopplungsleitungen (2) und einer Steuerleitung (3) mit einer Steuerungs- und Regelungsanlage (4) verbunden. Die Steuerleitungen (2) übertragen Meßwerte von der Maschinenanlage (1) über einen Meßumformer (1.4) zur Steuerungs- und Regelungsanlage (4). Die Steuerleitungen (3) übertragen Stellbefehle von der Steuerungsund Regelungsanlage (4) zum Stellantrieb (1.3) der Maschinenanlage (1), die z. B. aus einer Entspannungsturbine (1.1) zum Antrieb eines Verdichters (1.2), den zugehörigen Rohrleitungen (1.5) und (1.6) sowie aus Stellantrieben (1.3) und Meßumformern (1.4) besteht. Andere Maschinenanlagen sind ebenfalls denkbar.

Das erste Programmiergerät (5) ist über eine Programmierleitung (6) mit der Steuerungs- und Regelungsanlage (4) verbunden. Die Programmierleitung (6) ist üblicherweise eine mehradrige Spezialleitung von wenigen Metern Länge. Bei einer erforderlichen Programmänderung wird im ersten Programmiergerät (5) das im Programmspeicher des Programmiergerätes (5) gespeicherte Programm für die Steuerungs- und Regelungsanlage (4) geändert und anschließend über die Programmierleitung (6) in den Arbeitsspeicher (7) der Steuerungs- und Regelungsanlage (4) übertragen. Weiterhin werden über die Programmierleitung (6) aktuelle Betriebsdaten der Maschinenanlage (1) an das erste Programmiergerät (5) übertragen. An das erste Programmiergerät (5) sind ein Monitor (Bildschirm) (8) zur Darstellung der Betriebswerte und Programme sowie eine Tastatur (9) zur Eingabe von Steuerbefehlen und Programmierinstruktionen angeschlossen.

Ein zweites Programmiergerät (10) in einem zentralen Leitstand oder einem Entwicklungslabor (14) ist ebenfalls mit Monitor (11) und Tastatur (12) ausgerüstet und ist über eine Datenfernleitung (13) mit dem ersten Programmiergerät (5) verbunden. Diese Datenfernleitung (13) kann eine öffentliche Telefonleitung sein, aber auch eine drahtlose Verbindung in Form einer Mobiltelefonverbindung, einer Satellitenverbindung oder einer terristischen Funkverbindung. Über die Datenfernleitung (13) werden alle Steuerbefehle und alle Darstellungen auf den Monitoren zwischen den beiden Programmiereinheiten (5) und (10) koordiniert. Jeder Programmierbefehl am zweiten Programmiergerät (10) wird in einen über die Datenfernleitung (13) übertragbare Steuerbefehle umgesetzt und vom ersten Programmiergerät (5) empfangen. Dieses verarbeitet den Befehl dann so als sei er direkt vor Ort über die Tastatur (9) des ersten Programmiergerätes (5) eingegeben worden. Betriebswerte oder Informationen, die auf dem Monitor (8) des ersten Programmiergerätes (5) dargestellt werden, werden in über die Datenfernleitung (13) übertragbare Steuerbefehle umgesetzt, die die Darstellung auf dem Monitor (11) des zweiten Programmiergerätes (10) bewirken.

Da auf jedem der beiden Programmiergeräte (5) und (10) die gleiche Software installiert ist, genügen wenige Steuerbefehle, um auch komplexe Steueraktionen von einem Programmiergerät (5, 10) aus im jeweils anderen Programmiergerät (10, 5) auszulösen.

Der erforderliche Geräteumfang für das erste Programmiergerät (5) mit Monitor (8) und Tastatur (9) kann auch reduziert werden. Ist in der Nähe des ersten Programmiergerätes (5) kein Programmierer anwesend, entfällt die Notwendigkeit, einen Monitor (8) anzuschließen. Auch auf die örtliche Tastatur (9) kann verzichtet werden. Weiterhin kann der Funktionsumfang des ersten Programmiergerätes (5) so weit reduziert werden, daß dieses Gerät nur noch in der Lage ist, die Steuerbefehle vom zweiten Programmiergerät (10) aus dem zentralen Leitstand (14) zu empfangen und derart umzusetzen, daß die erforderlichen Aktionen ausgeführt werden.

Datenanforderungsbefehle des zweiten Programmiergerätes (10) müssen erkannt werden und die angeforderten Daten und Informationen über die Datenfernleitung übertragen werden.

Eine ähnliche Funktionsreduzierung kann für das zweite Programmiergerät (10) mit Bildschirm (11) und Tastatur (12) vorgenommen werden. Funktionen, die an diesem Bedienort nicht erforderlich sind, z. B. das Beschreiben eines EEPROMs usw., kann aus diesem Programmiergerät entfallen. Ähnliche Funktionsreduzierungen können für nicht benötigte Softwarefunktionen vorgenommen werden.

### Bezugsziffernliste:

- 1: Maschinenanlage
- 1.1: Antriebsaggregat/Entspannungsturbine
- 1.2: Verdichter/Turbokompressor
- 1.3: Stellantriebe
- 1.4: Meßumformer
- 1.5: Eintrittsleitung
- 1.6: Fördermittelleitung
- 2: Rückkoppelungsleitung
- 3: Steuerleitung
- 4: Steuer- und Regelanlage, Maschinenleitsystem
- 5: Programmiergerät am Ort der Betriebsstätte der Maschinenanlage (Erstes Programmiergerät)
- 6: Programmierleitung
- 7: Programmspeicher
- 8: Bildschirm/Monitor
- 9: Eingabe-Tastatur
- 10: Programmiergerät im zentralen Leitstand oder Entwicklungslabor (Zweites Programmiergerät)
- 11: Bildschirm/Monitor
- 12: Eingabe-Tastatur
- 13: Datenfernleitung
- 14: Zentraler Leitstand/Fernüberwachungs-Zentrale/ Entwicklungslabor

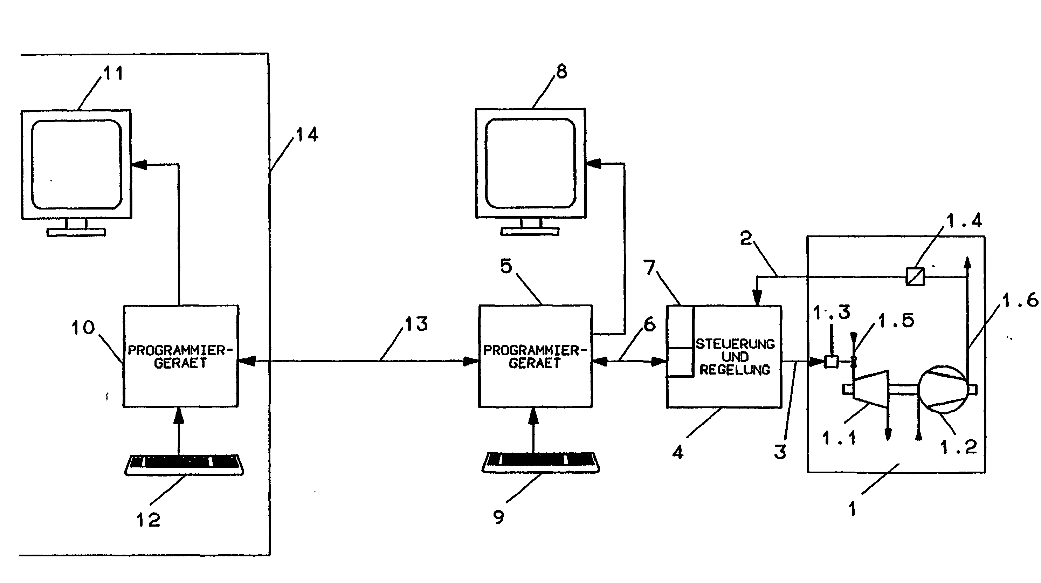

## Patentansprüche

1. Anordnung zum Parametrieren, Strukturieren und Programmieren einer Steuerungs- und Regelungsanlage (4) oder eines Maschinenleitsystems für Maschinenanlagen, insbesondere von Turbinen und Verdichtern, sowie deren Antriebseinheiten und deren Zubehör, wobei an die Steuerungs- und Regelungsanlage (4) oder an das Maschinenleitsystem über eine Programmierleitung (6) ein erstes Programmiergerät (5) angeschlossen ist, **dadurch gekennzeichnet, daß** das erste Programmiergerät (5) über eine Datenfernleitung (13) mit einem zweiten Programmiergerät (10) verbunden ist, daß das zweite Programmiergerät (10) alle Funktionen umfaßt, die auch auf dem ersten, an die Steuerungs- und Regelungsanlage (4) oder an das Maschinenleitsystem angeschlossenen Programmiergerät (5) verfügbar sind, und daß sowohl von dem ersten Programmiergerät (5) als auch von dem zweiten Programmiergerät (10) alle Betriebswerte der Maschinenanlage (1) abrufbar und alle Parameter und Programmstrukturen der Maschinenanlage änderbar sind.

2. Verfahren zum Parametrieren, Strukturieren und Programmieren einer Steuerungs- und Regelungsanlage (4) oder eines Maschinenleitsystems für Maschinenanlagen unter Verwendung der Anordnung nach den Ansprüchen 1 oder 2, **dadurch gekennzeichnet, daß** jedes Programmiergerät (5, 10) auf die Massenspeicher des jeweils anderen Programmiergerätes (10, 5) zugreift und jedes Programmiergerät (5, 10) jeden Massenspeicher beschreibt und ausliest.

3. Verfahren nach Anspruch 2, **dadurch gekennzeichnet, daß** als Datenfernleitung (13) eine öffentliche oder private Telefonleitung benutzt wird.

4. Verfahren nach Anspruch 2, **dadurch gekennzeichnet, daß** als Datenfernleitung (13) eine Mobilfunkverbindung genutzt wird.

5. Verfahren nach Anspruch 2, **dadurch gekennzeichnet, daß** als Datenfernleitung (13) eine Satellitenverbindung genutzt wird.

6. Verfahren nach Anspruch 2, **dadurch gekennzeichnet, daß** als Datenfernleitung (13) eine terristische Funkverbindung genutzt wird.

7. Verfahren nach einem der Ansprüche 2 bis 6, **dadurch gekennzeichnet, daß** die Datenfernleitung (13) und die Programmiergeräte (5, 10) nach Abschluß der Inbetriebnahme der Maschinenanlage zur Übertragung aktueller Betriebsdaten der Maschinenanlage (1) zu einer Fernüberwachungszentrale (14) genutzt werden.

8. Verfahren nach einem der Ansprüche 2 bis 7, **dadurch gekennzeichnet, daß** die Datenfernleitung (13) und die Programmiergeräte (5, 10) zur Fernbedienung der Maschinenanlage (1) benutzt werden.

## Claims

1. Arrangement for parameterising, structuring and programming a control and regulating installation (4) or a machine management system for machine installations, especially of turbines and compressors, as well as the drive units thereof and accessories therefor, wherein a first programming apparatus (5) is connected by way of a programming line (6) with the control and regulating installation (4) or with the machine management system, **characterised in that** the first programming apparatus (5) is connected with a second programming apparatus (10) by way of a data transmission line (13), that the second programming apparatus (10) embraces all functions which are also available at the first programming apparatus (5) connected with the control and regulating installation (4) or with the machine management system, and that all operating values of the machine installation (1) can be called up, and all parameters and program structures of the machine installation are variable, not only by the first programming apparatus (5), but also by the second programming apparatus (10).

2. Method of parameterising, structuring and programming a control and regulating installation (4) or a machine management system for machine installations with use of the arrangement according to claim 1 or 2, **characterised in that** each programming apparatus (5, 10) accesses the background memory of the respective other programming apparatus (10, 5) and each program apparatus (5, 10) writes and reads out from each background memory.

3. Method according to claim 2, **characterised in that** a public or private telephone line is used as data transmission line (13).

4. Method according to claim 2, **characterised in that** a mobile radio connection is used as data transmission line (13).

5. Method according to claim 2, **characterised in that** a satellite connection is used as data transmission line (13).

6. Method according to claim 2, **characterised in that** a terrestrial radio connection is used as data transmission line (13).

7. Method according to one of claims 2 to 6, **characterised in that** the data transmission line (13) and the programming apparatus (5, 10) are utilised, after the conclusion of placing the machine installation into operation, for transmission of actual operating data of the machine installation (1) to a remote monitoring station (14).

8. Method according to one of claims 2 to 7, **characterised in that** the data transmission line (13) and the programming apparatus (5, 10) are used for remote control of the machine installation (1).

## Revendications

1. Agencement pour le paramétrage, la structuration et la programmation d'une installation de commande et de régulation (4) ou d'un système de contrôle de machines pour des installations motrices, en particulier de turbines et de compresseurs, ainsi que pour leurs unités d'entraînement et leurs accessoires, un premier programmateur (5) étant relié à l'installation de commande et de régulation (4) ou au système de contrôle de machines par l'intermédiaire d'une ligne de programmation (6), **caractérisé en ce que** le premier programmateur (5) est relié à un second programmateur (10) par l'intermédiaire d'une ligne de transmission de données (13), **en ce que** le second programmateur (10) comporte toutes les fonctions qui sont également disponibles sur le premier programmateur (5), relié à l'installation de commande et de régulation (4) ou au système de contrôle de machines, et **en ce que** tous les paramètres de fonctionnement de l'installation motrice (1) peuvent être appelés aussi bien par le premier programmateur (5) que par le second programmateur (10), et tous les paramètres et structures de programme de l'installation motrice sont modifiables.

2. Procédé pour le paramétrage, la structuration et la programmation d'une installation de commande et de régulation (4) ou d'un système de contrôle de machines pour des installations motrices en utilisant l'agencement suivant la revendication 1, **caractérisé en ce que** chaque programmateur (5, 10) accède aux mémoires de masse de l'autre programmateur respectif (10, 5), et chaque programmateur (5, 10) décrit et lit chaque mémoire de masse.

3. Procédé suivant la revendication 2, **caractérisé en ce qu'**une ligne téléphonique publique ou privée est utilisée comme ligne de transmission de données (13).

4. Procédé suivant la revendication 2, **caractérisé en ce qu'**une liaison radiotéléphonique mobile est utilisée comme ligne de transmission de données (13).

5. Procédé suivant la revendication 2, **caractérisé en ce qu'**une liaison par satellite est utilisée comme ligne de transmission de données (13).

6. Procédé suivant la revendication 2, **caractérisé en ce qu'**une liaison radio terrestre est utilisée comme ligne de transmission de données (13).

7. Procédé suivant l'une des revendications 2 à 6, **caractérisé en ce que** la ligne de transmission de données (13) et les programmateurs (5, 10) sont utilisés, après la fin de la mise en service de l'installation motrice, pour la transmission de données d'exploitation actuelles de l'installation motrice (1) à une centrale de télésurveillance (14).

8. Procédé suivant l'une des revendications 2 à 7, **caractérisé en ce que** la ligne de transmission de données (13) et les programmateurs (5, 10) sont utilisés pour la télécommande de l'installation motrice (1).
